# EUROPÄISCHE PATENTSCHRIFT

(11) **EP 3 031 088 B1**
(45) Veröffentlichungstag und Bekanntmachung des Hinweises auf die Patenterteilung: **31.03.2021**
(21) Anmeldenummer: 14733580.6
(22) Anmeldetag: 18.06.2014
(51) Int. Cl.: H01M 2/10, B60L 3/00, B60L 50/64, B60L 58/21, B60L 58/24, B60L 58/18, B60L 50/20

(54) **AKKUMULATORMODUL MIT VERBESSERTEM SCHUTZ SOWIE AKKUMULATORPAKET**
BATTERY MODULE HAVING IMPROVED PROTECTION, AND BATTERY PACK
MODULE ACCUMULATEUR À PROTECTION AMÉLIORÉE ET ENSEMBLE D'ACCUMULATEURS

(30) Priorität: 06.08.2013 DE 102013215492
(43) Veröffentlichungstag der Anmeldung: 15.06.2016
(73) Patentinhaber: Robert Bosch GmbH, 70442 Stuttgart (DE)
(72) Erfinder: HAESSLER, Johannes, 78086 Brigachtal (DE); MUELLER, Lutz, 72631 Aichtal (DE); NEUBERGER, Markus, 72768 Reutlingen (DE)
(86) Internationale Anmeldenummer: PCT/EP2014/062785
(87) Internationale Veröffentlichungsnummer: WO 2015/018553

(56) Entgegenhaltungen:
- EP-A1- 2 033 849
- JP-A- H1 027 591
- US-A1- 2006 068 278
- US-A1- 2008 220 321
- US-A1- 2009 197 153
- US-A1- 2009 226 803
- US-B1- 6 445 582

## Beschreibung

### Stand der Technik

Die vorliegende Erfindung betrifft ein Akkumulatormodul mit einem verbesserten Schutz, insbesondere gegen Bersten, sowie ein Akkumulatorpaket, umfassend eine Vielzahl erfindungsgemäßer Akkumulatormodule.

Akkumulatormodule sind aus dem Stand der Technik in unterschiedlichen Ausgestaltungen bekannt. Ein Verwendungszweck derartiger Akkumulatormodule ist beispielsweise bei Elektrofahrrädern, Laptops, Elektrowerkzeugen, wobei üblicherweise eine Vielzahl von Akkumulatormodulen samt Steuerung von einem Kunststoffgehäuse umgeben sind. Insbesondere bei Lithium-Ionen-Akkus kann jedoch bei Feuereinwirkung oder bei fehlerhaften Modulen oder bei einer falschen Beschaltung im Inneren des Akkus ein Druck aufgebaut werden, welcher sich durch Bersten der Außenhülle des Akkumulatorpakets entspannen kann. Hierbei kann die Umgebung mit Elektrolyt kontaminiert werden. Der Elektrolyt enthält Lösemittel und Leitsalze, deren Zersetzung gefährliche Zersetzungsprodukte entstehen lassen kann. Ferner sind die Lösemittel häufig brennbar und können explosionsgefährliche Lösemitteldampf-Luftgemische erzeugen. Um das Bersten der Außenhülle des Akkus zu vermeiden, wird üblicherweise eine sogenannte Berstscheibe in die Außenhülle eingebaut. Allerdings kann insbesondere bei zylindrischen Akkugehäusen durch rasche Erhitzung ein sogenannter "Kolbeneffekt" eintreten, bei welchem die Berstscheibe reißen kann und im äußerst ungünstigsten Fall der gesamte Zellinhalt ausgeworfen werden kann. Bei vielen Anwendungen werden eine Vielzahl von einzelnen Akkumulatormoduln zu Batteriebündeln zusammengefasst, welche zusätzlich noch eine weitere Außenhülle, z.B. aus Kunststoff, erhalten. Allerdings kann insbesondere bei einem Brand die Außenhülle erweichen, so dass auch bei derartigen Akkumulatorpaketen der unerwünschte "Kolbeneffekt" vorkommen kann. Weiterhin ist aus der DE 10 2011 089 949 A1 ein Akkumulatormodul bekannt, welches von einem luftdichten Schrumpfschlauch umgeben ist. Ferner zeigt die US 2009/0197153 A1 ein Akkumulatormodul gemäß dem Oberbegriff des Anspruchs 1.

### Offenbarung der Erfindung

Das erfindungsgemäße Akkumulatormodul mit den Merkmalen des Anspruches 1 hat dem gegenüber den Vorteil, dass die schädlichen Wirkungen des Berstens und insbesondere des sogenannten "Kolbeneffekts", bei welchem der komplette Inhalt einer Akkumulatorzelle ausgeworfen wird, vermieden werden kann. Dabei weist das erfindungsgemäße Akkumulatormodul trotzdem einen sehr kostengünstigen und einfachen Aufbau auf. Dies wird erfindungsgemäß dadurch erreicht, dass das Akkumulatormodul wenigstens eine Akkumulatorzelle und eine die Akkumulatorzelle umschließende Hülle umfasst. Die Hülle umfasst dabei ausschließlich Fasern derart, dass durchgehende Zwischenräume zwischen den Fasern verbleiben. Somit weist die Hülle erfindungsgemäß eine netzartige Struktur oder dergleichen auf, bei der Zwischenräume vorhanden sind. Die umschließende Hülle ermöglicht dabei, dass selbst bei einem Bersten einer Außenhülle einer Akkumulatorzelle der Feststoffinhalt der Akkumulatorzelle im Akkumulatormodul gehalten werden kann, ohne dass es zu dem im Stand der Technik beschriebenen unerwünschten Auswurf oder dergleichen kommen kann. Dadurch kann erfindungsgemäß bei einem derartigen unerwünschten Bersten ein sicheres Abblasen des Überdrucks durch die beispielsweise gerissene Außenhülle der Akkumulatorzelle und durch die Hülle erfolgen. Erfindungsgemäß wird unter dem Begriff Akkumulatorzelle eine wiederaufladbare Zelle verstanden, bei welcher aufgrund beispielsweise eines mangelhaften Ladezyklus die vorherige genannte Problematik auftreten kann.

Die Unteransprüche zeigen bevorzugte Weiterbildungen der Erfindung.

Vorzugsweise ist die Hülle aus einzelnen Fasern hergestellt. Die Fasern sind vorzugsweise aus elektrisch nichtleitendem Material und/oder weisen eine elektrisch nichtleitende Ummantelung auf. Hierdurch kann eine Hülle mit relativ kleinen Zwischenräumen hergestellt werden. Ferner können die Fasern umittelbar zur Hülle verarbeitet werden. Alternativ ist die Hülle aus Faserbündeln hergestellt. Hierdurch können die Faserbündel höhere Festigkeiten als einzelne Fasern aufweisen. Weiterhin können in Faserbündeln Fasern unterschiedlichen

Materials verwendet werden. Die Faserbündel sind vorzugsweise mehrere miteinander verdrehte einzelne Fasern oder vorzugsweise mehrere zueinander parallel angeordnete Fasern oder weiter bevorzugt mehrere miteinander verflochtene Fasern. Die Fasern sind vorzugsweise Langfasern mit einer Länge zwischen 1mm bis 50mm.

Weiter bevorzugt ist die aus Fasern hergestellte Hülle ein Gewebe oder ein Geflecht oder ein Gewirke oder ein Gelege. Auch weitere Herstellungsverfahren sind denkbar, um eine Hülle aus Fasern mit einer Vielzahl von Zwischenräumen herzustellen. Besonders bevorzugt sind die Zwischenräume dabei jeweils gleich groß. Weiter bevorzugt ist es auch möglich, eine Hülle aus einer Mischung von einzelnen Fasern und Faserbündeln herzustellen.

Ein besonders sicherer Berst- und Auswurfschutz wird erreicht, wenn die Hülle zumindest eine erste Stirnseite der Akkumulatorzelle und/oder eine zweite Stirnseite der Akkumulatorzelle überdeckt. Besonders bevorzugt wird die Akkumulatorzelle vollständig von der Hülle umschlossen.

Gemäß einer weiteren bevorzugten Ausgestaltung der vorliegenden Erfindung sind eine Vielzahl von Akkumulatorzellen nebeneinander, beispielsweise in Reihe, angeordnet und eine einzelne Hülle umschließt gemeinsam alle Akkumulatormodule. Hierdurch können insbesondere Akkumulatormodule für größere Anwendungen, beispielsweise bei Elektrofahrrädern, hergestellt werden.

Weiter bevorzugt umfasst das Akkumulatormodul ein Anschlusselement, wobei die Zwischenräume der Hülle derart vorgesehen sind, dass das Anschlusselement durch wenigstens einen der Zwischenräume geführt ist. Alternativ wird die Akkumulatorzelle mittels eines externen Kontaktelements durch die Zwischenräume in der Hülle kontaktiert. Weiter bevorzugt ist auch ein Akkusteuergerät innerhalb der Hülle angeordnet.

Vorzugsweise ist die Hülle ein Schlauch. Hierdurch kann die Hülle einfach über eine einzelne Akkumulatorzelle oder eine Vielzahl von Akkumulatorzellen übergezogen werden. Der Schlauch ist vorzugsweise an einem ersten und/oder zweiten Ende verschlossen. Alternativ ist die Hülle ein gewickeltes Band, welches um die Akkumulatorzelle herumgewickelt ist. Das Ende des Bandes kann dann beispielsweise mittels Kleben auf der gewickelten Außenfläche der Hülle fixiert werden.

Vorzugsweise wird die aus Fasern bestehende Hülle von einer zusätzlichen, insbesondere wasser- und schmutzabweisenden, zweiten Hülle aus Metall oder Kunststoff abgedeckt. Die Faserhülle kann auf der Außenseite und/oder Innenseite der Hülle aufgebracht sein.

Vorzugsweise sind die Fasern aus einem temperaturbeständigen, schwer entflammbaren oder nicht brennbaren und elektrisch nicht leitenden Material, insbesondere sind die Fasern Glasfasern oder Quarzfasern oder Basaltfasern oder Aramidfasern oder Imidfasern oder metallische Fasern mit temperaturbeständiger Isolierung. Die Fasern können auch eine Beschichtung und/oder Ummantelung aufweisen. Weiter bevorzugt umfasst die Hülle Klebstoff, um die Fasern gegeneinander zu fixieren.

Weiter bevorzugt sind die Akkumulatorzellen in zylindrischer Form vorgesehen.

Weiterhin betrifft die vorliegende Erfindung ein Akkumulatorpaket, umfassend eine Vielzahl von erfindungsgemäßen Akkumulatormoduln.

Ferner betrifft die vorliegende Erfindung ein Fahrzeug, insbesondere ein Elektrofahrrad, umfassend ein erfindungsgemäßes Akkumulatormodul oder ein erfindungsgemäßes Akkumulatorpaket.

Weiter bevorzugt umfasst das Akkumulatormodul ein Gehäuse, in welches die Hülle integriert ist. Das Gehäuse ist vorzugsweise aus thermoplastischem Kunststoff. Die im Gehäuse angeordneten Fasern erhöhen die Stabilität des Gehäuses. Die Fasern sind vorzugsweise vom Material des Gehäuses umspritzt. Die Vielzahl von Fasern sind vorzugsweise als Gewirke oder Gewebe oder Geflecht oder Gelege vorgesehen und von dem Gehäusematerial umgeben. Alternativ ist eine Hülle aus Fasern mit dazwischen vorgesehenen Zwischenräumen an einer Innenseite des Gehäuses angeordnet.

Die in das Gehäuse integrierten Fasern sind vorzugsweise Langfasern mit einer Länge zwischen 1mm bis 50mm.

### Zeichnung

Nachfolgend werden bevorzugte Ausführungsbeispiele der Erfindung unter Bezugnahme auf die begleitende Zeichnung im Detail beschrieben. In der Zeichnung sind gleiche bzw. funktional gleiche Bauteile mit den gleichen Bezugszeichen bezeichnet. In der Zeichnung ist:
- Figur 1: eine schematische Draufsicht eines Akkumulatormoduls gemäß einem ersten Ausführungsbeispiel der Erfindung,
- Figur 2: eine schematische Schnittansicht des Akkumulatormoduls von Figur 1,
- Figur 3: eine vergrößerte, schematische Draufsicht einer einzelnen Akkumulatorzelle des Akkumulatormoduls von Figur 1,
- Figur 4: eine schematische Draufsicht eines Akkumulatormoduls gemäß einem zweiten Ausführungsbeispiel der Erfindung, und
- Figur 5: eine schematische Schnittansicht des Akkumulatormoduls von Figur 4.

### Bevorzugte Ausführungsformen der Erfindung

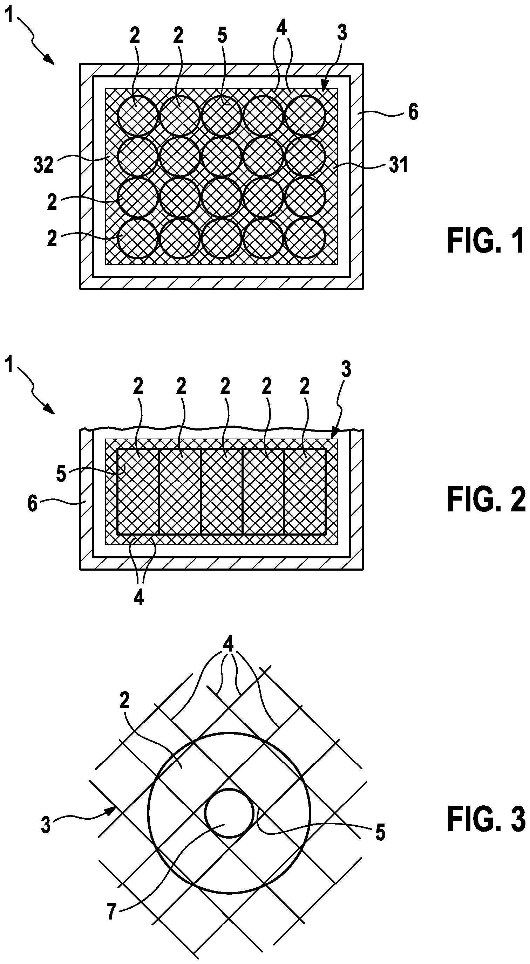

Nachfolgend wird unter Bezugnahme auf die Figuren 1 bis 3 ein Akkumulatormodul 1 gemäß einem ersten bevorzugten Ausführungsbeispiel der Erfindung im Detail beschrieben.

Wie aus Figur 1 ersichtlich ist, umfasst das Akkumulatormodul 1 eine Vielzahl von Akkumulatorzellen 2. Die Akkumulatorzellen 2 sind dabei beispielsweise in vier parallel zueinander angeordneten Reihen à fünf Stück vorgesehen. Die einzelnen Akkumulatorzellen 2 sind dabei elektrisch miteinander verschaltet.

Um die Vielzahl der Akkumulatorzellen 2 herum ist eine einzige, gemeinsame Hülle 3 vorgesehen. Die Hülle 3 umfasst eine Vielzahl von Fasern, welche in diesem Ausführungsbeispiel miteinander verwoben sind. Dadurch sind Zwischenräume 5 zwischen den einzelnen Fasern vorhanden. Es sei angemerkt, dass die Fasern auch gewirkt oder gestrickt oder gelegt sein können. Die Fasern 4 sind dabei derart zur Hülle ausgebildet, dass gleichförmige durch die Hülle 3 reichende Zwischenräume 5 entstehen (vergleiche Figur 3). Die Zwischenräume weisen dabei eine Größe auf, die kleiner als eine minimale Größe von zu erwartenden Auswurfstücken des Akkumulatormoduls ist.

Die einzelnen Fasern 4 sind dabei in zwei Richtungen zueinander parallel angeordnet. Wie aus Figur 3 ersichtlich ist, kann eine Kontaktierung eines Anschlusselements 7 jeder Akkumulatorzelle 2 z. B. durch einen Zwischenraum 5 erfolgen. Hierbei kann entweder das Anschlusselement 7 durch den Zwischenraum 5 vorstehen, oder ein externes Kontaktelement wird durch den Zwischenraum 5 geführt und kontaktiert das Anschlusselement 7 der Akkumulatorzelle. Alternativ kann z. B. ein Akkusteuergerät auch in der Hülle angeordnet sein.

Die Hülle 3 berührt somit die äußeren Gehäuseteile der Akkumulatorzellen 3 sowie die beiden Stirnseiten der Akkumulatorzellen 2. Die Akkumulatorzellen 2 dieses Ausführungsbeispiels sind dabei zylindrisch ausgebildet.

Die Hülle 3 dieses Ausführungsbeispiels ist als Schlauch ausgebildet und über die Vielzahl der Akkumulatorzellen 2 gezogen und an einem ersten Ende 31 und einem zweiten Ende 32 verschlossen. Das Verschließen der Hülle kann auf unterschiedliche Weise erfolgen, beispielsweise durch Verkleben oder Vernähen oder dergleichen.

Somit bildet die Hülle 3 eine im Wesentlichen netzartige Struktur um die Vielzahl der Akkumulatorzellen 2. Damit kann in einem Gefahrenfall, in welchem eine oder mehrere der Akkumulatorzellen geborsten ist, die Hülle 3 verhindern, dass innere Teile der Akkumulatorzelle 2 aus dem Akkumulatorzellengehäuse herausgeworfen werden. Somit kann eine Sicherheit des Akkumulatormoduls signifikant verbessert werden.

Durch die netzartige Hülle 3 kann somit ein Überdruck auch bei einem zerstörten Akkumulatorzellengehäuse durch die Zwischenräume 5 sicher abgeblasen werden.

Das Akkumulatormodul 1 dieses Ausführungsbeispiels umfasst ferner ein Gehäuse 6, welches vorzugsweise aus Kunststoff hergestellt ist und die Akkumulatorzellen 2 aufnimmt. Das Akkumulatormodul 1 dieses Ausführungsbeispiels wird beispielsweise bei Elektrofahrrädern verwendet.

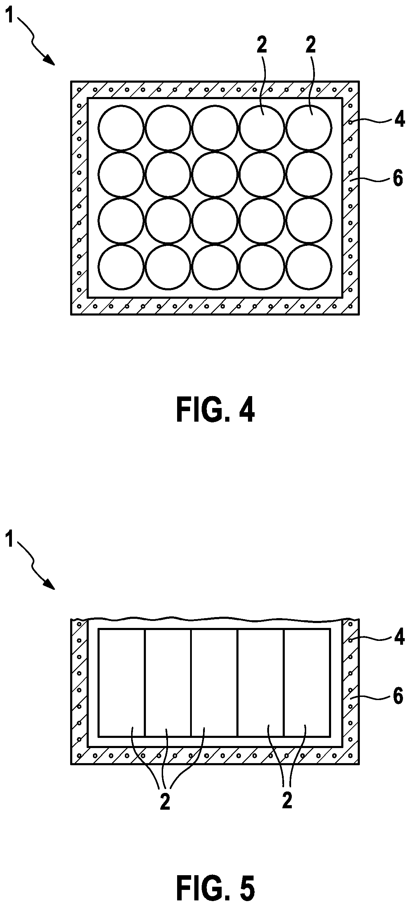

Figuren 4 und 5 zeigen ein Akkumulatormodul 1 gemäß einem zweiten Ausführungsbeispiel der Erfindung. Im Unterschied zum ersten Ausführungsbeispiel ist beim Akkumulatormodul des zweiten Ausführungsbeispiels ein Berstschutz in das Gehäuse 6 des Akkumulatormoduls 1 integriert. Dabei sind in das Gehäuse 6 eine Vielzahl von Fasern 4 integriert. Somit wird als Gehäuse 6 ein faserverstärkter Kunststoff verwendet, welcher ebenfalls verhindert, dass in einem Gefahreinfall Bauteile aus dem Inneren der Akkumulatorzelle 2 in die Umgebung gelangen können.

## Patentansprüche

1. Akkumulatormodul, umfassend
- wenigstens eine Akkumulatorzelle (2), und
- eine die Akkumulatorzelle (2) umschließende Hülle (3), wobei die Hülle (3) Fasern (4) umfasst, wobei zwischen den Fasern (4) Zwischenräume (5) verbleiben,
**dadurch gekennzeichnet, dass**
- die Hülle (3) eine netzartige Struktur aufweist, und
- die Fasern (4) aus einem elektrisch nichtleitendem Material sind.

2. Akkumulatormodul nach Anspruch 1, **dadurch gekennzeichnet, dass** die Hülle (3) aus einzelnen Fasern hergestellt ist oder dass die Hülle (3) aus Faserbündeln hergestellt ist.

3. Akkumulatormodul nach einem der vorhergehenden Ansprüche, **dadurch gekennzeichnet, dass** die Hülle (3) ein Gewirke oder ein Gewebe oder ein Geflecht oder ein Gelege ist.

4. Akkumulatormodul nach einem der vorhergehenden Ansprüche, **dadurch gekennzeichnet, dass** die Hülle (3) zumindest eine erste Stirnseite der Akkumulatorzelle (2) und/oder eine zweite Stirnseite der Akkumulatorzelle (2) bedeckt.

5. Akkumulatormodul nach einem der vorhergehenden Ansprüche, **dadurch gekennzeichnet, dass** die Akkumulatorzelle (2) vollständig von der Hülle (3) umschlossen ist.

6. Akkumulatormodul nach einem der vorhergehenden Ansprüche, **dadurch gekennzeichnet, dass** eine Vielzahl von Akkumulatorzellen (2) nebeneinander angeordnet ist und eine gemeinsame Hülle (3) alle Akkumulatorzellen (2) umschließt.

7. Akkumulatormodul nach einem der vorhergehenden Ansprüche, **dadurch gekennzeichnet, dass** die Zwischenräume (5) zwischen den Fasern (4) der Hülle (3) derart vorgesehen sind, dass elektrische Kontaktelemente (7) der Akkumulatorzellen (2) durch die Zwischenräume in der Hülle (3) kontaktierbar sind oder dass Kontaktelemente (7) der Akkumulatorzelle (2) durch die Zwischenräume (5) aus der Hülle (3) vorstehen.

8. Akkumulatormodul nach einem der vorhergehenden Ansprüche, **dadurch gekennzeichnet, dass** die Hülle (3) ein Schlauch ist, welcher insbesondere offen ist oder insbesondere an einem ersten Ende (31) und einem zweiten Ende (32) verschlossen ist, oder dass die Hülle (3) ein gewickeltes Band ist.

9. Akkumulatormodul nach einem der vorhergehenden Ansprüche, **dadurch gekennzeichnet, dass** die Hülle (3) die Akkumulatorzelle (2) berührt und insbesondere straff umschließt.

10. Akkumulatormodul nach einem der vorhergehenden Ansprüche, **dadurch gekennzeichnet, dass** die faserhaltige Hülle von einer zusätzlichen zweiten Hülle aus Thermoplast an einer Innenseite und/oder einer Außenseite umschlossen ist.

11. Akkumulatormodul nach einem der vorhergehenden Ansprüche, **dadurch gekennzeichnet, dass** ein Akkusteuergerät von der Hülle umschlossen ist.

12. Akkumulatormodul nach einem der vorhergehenden Ansprüche, **dadurch gekennzeichnet, dass** die Fasern in ein Gehäuse, insbesondere ein aus thermoplastischem Kunststoff hergestelltes Gehäuse, integriert sind.

13. Akkumulatormodul nach einem der vorhergehenden Ansprüche, **dadurch gekennzeichnet, dass** die Fasern Glasfasern oder Quarzfasern oder Basaltfasern oder Aramidfasern oder Imidfasern sind oder dass die Fasern Langfasern mit einer Länge zwischen 1mm bis 50mm sind.

14. Akkumulatorpaket, umfassend eine Vielzahl von Akkumulatormodulen nach einem der vorhergehenden Ansprüche.

15. Fahrzeug, insbesondere Elektrofahrrad, umfassend ein Akkumulatormodul nach einem der Ansprüche 1 bis 13 oder ein Akkumulatorpaket nach Anspruch 14.

## Claims

1. Rechargeable battery module, comprising
- at least one rechargeable battery cell (2), and
- a sleeve (3) which encloses the rechargeable battery cell (2), wherein the sleeve (3) comprises fibres (4), wherein intermediate spaces (5) remain between the fibres (4),
**characterized in that**
- the sleeve (3) has a net-like structure, and
- the fibres (4) are composed of an electrically non-conductive material.

2. Rechargeable battery module according to Claim 1, **characterized in that** the sleeve (3) is produced from individual fibres, or **in that** the sleeve (3) is produced from fibre bundles.

3. Rechargeable battery module according to either of the preceding claims, **characterized in that** the sleeve (3) is a knitted fabric or a woven fabric or a braided fabric or a laid-scrim fabric.

4. Rechargeable battery module according to one of the preceding claims, **characterized in that** the sleeve (3) covers at least a first end side of the rechargeable battery cell (2) and/or a second end side of the rechargeable battery cell (2).

5. Rechargeable battery module according to one of the preceding claims, **characterized in that** the rechargeable battery cell (2) is completely enclosed by the sleeve (3).

6. Rechargeable battery module according to one of the preceding claims, **characterized in that** a large number of rechargeable battery cells (2) are arranged next to one another and a common sleeve (3) encloses all of the rechargeable battery cells (2).

7. Rechargeable battery module according to one of the preceding claims, **characterized in that** the intermediate spaces (5) are provided between the fibres (4) of the sleeve (3) in such a way that electrical contact elements (7) of the rechargeable battery cells (2) can be contacted through the intermediate spaces in the sleeve (3), or **in that** contact elements (7) of the rechargeable battery cell (2) project through the intermediate spaces (5) out of the sleeve (3).

8. Rechargeable battery module according to one of the preceding claims, **characterized in that** the sleeve (3) is a tube which is, in particular, open or is closed, in particular, at a first end (31) and a second end (32), or **in that** the sleeve (3) is a wound strip.

9. Rechargeable battery module according to one of the preceding claims, **characterized in that** the sleeve (3) makes contact with the rechargeable battery cell (2) and in particular tightly encloses it.

10. Rechargeable battery module according to one of the preceding claims, **characterized in that** the fibre-containing sleeve is enclosed by an additional second sleeve composed of thermoplastic on an inner side and/or an outer side.

11. Rechargeable battery module according to one of the preceding claims, **characterized in that** a rechargeable battery control unit is enclosed by the sleeve.

12. Rechargeable battery module according to one of the preceding claims, **characterized in that** the fibres are integrated into a housing, in particular a housing which is produced from thermoplastic.

13. Rechargeable battery module according to one of the preceding claims, **characterized in that** the fibres are glass fibres or quartz fibres or basalt fibres or aramid fibres or imide fibres, or **in that** the fibres are long fibres with a length of between 1 mm and 50 mm.

14. Rechargeable battery pack comprising a large number of rechargeable battery modules according to one of the preceding claims.

15. Vehicle, in particular electric bicycle, comprising a rechargeable battery module according to one of Claims 1 to 13 or a rechargeable battery pack according to Claim 14.

## Revendications

1. Module accumulateur, comprenant
- au moins une cellule d'accumulateur (2), et
- une enveloppe (3) entourant la cellule d'accumulateur (2), dans lequel l'enveloppe (3) comprend des fibres (4) et des interstices (5) sont ménagés entre les fibres (4),
**caractérisé en ce que**
- l'enveloppe (3) présente une structure réticulée, et
- les fibres (4) sont composées d'un matériau électriquement non conducteur.

2. Module accumulateur selon la revendication 1, **caractérisé en ce que** l'enveloppe (3) est fabriquée à partir de fibres individuelles, ou **en ce que** l'enveloppe (3) est fabriquée à partir de faisceaux de fibres.

3. Module accumulateur selon l'une quelconque des revendications précédentes, **caractérisé en ce que** l'enveloppe (3) est un maillage ou un tissu ou un treillis ou une nappe.

4. Module accumulateur selon l'une quelconque des revendications précédentes, **caractérisé en ce que** l'enveloppe (3) recouvre au moins une première face frontale de la cellule d'accumulateur (2) et/ou une deuxième face frontale de la cellule d'accumulateur (2).

5. Module accumulateur selon l'une quelconque des revendications précédentes, **caractérisé en ce que** la cellule d'accumulateur (2) est entourée entièrement par l'enveloppe (3).

6. Module accumulateur selon l'une quelconque des revendications précédentes, **caractérisé en ce que** plusieurs cellules d'accumulateur (2) sont disposées côte à côte, et une enveloppe commune (3) entoure toutes les cellules d'accumulateur (2).

7. Module accumulateur selon l'une quelconque des revendications précédentes, **caractérisé en ce que** les interstices (5) entre les fibres (4) de l'enveloppe (3) sont prévus de telle sorte que des éléments de contact électrique (7) des cellules d'accumulateur (2) peuvent être mis en contact à travers les interstices dans l'enveloppe (3), ou **en ce que** des éléments de contact (7) de la cellule d'accumulateur (2) font saillie à travers les interstices (5) à l'extérieur de l'enveloppe (3).

8. Module accumulateur selon l'une quelconque des revendications précédentes, **caractérisé en ce que** l'enveloppe (3) est un tube qui est en particulier ouvert ou est en particulier fermé à une première extrémité (31) et à une deuxième extrémité (32), ou **en ce que** l'enveloppe (3) est un ruban enroulé.

9. Module accumulateur selon l'une quelconque des revendications précédentes, **caractérisé en ce que** l'enveloppe (3) touche la cellule d'accumulateur (2) et l'entoure en particulier de manière serrée.

10. Module accumulateur selon l'une quelconque des revendications précédentes, **caractérisé en ce que** l'enveloppe à base de fibres est entourée par une deuxième enveloppe supplémentaire en matière thermoplastique sur une face intérieure et/ou une face extérieure.

11. Module accumulateur selon l'une quelconque des revendications précédentes, **caractérisé en ce que** l'appareil de commande d'accumulateur est entouré par l'enveloppe.

12. Module accumulateur selon l'une quelconque des revendications précédentes, **caractérisé en ce que** les fibres sont intégrées dans un boîtier, en particulier un boîtier fabriqué en matière thermoplastique.

13. Module accumulateur selon l'une quelconque des revendications précédentes, **caractérisé en ce que** les fibres sont des fibres de verre ou des fibres de quartz ou des fibres de basalte ou des fibres d'aramide ou des fibres d'imide, ou **en ce que** les fibres sont des fibres longues d'une longueur comprise entre 1 mm et 50 mm.

14. Bloc d'accumulateur, comprenant une pluralité de modules accumulateurs selon l'une quelconque des revendications précédentes.

15. Véhicule, en particulier bicyclette électrique, comprenant un module accumulateur selon l'une quelconque des revendications 1 à 13 ou un bloc d'accumulateur selon la revendication 14.
